# EUROPÄISCHE PATENTANMELDUNG

(11) **EP 4 066 688 A1**
(43) Veröffentlichungstag der Anmeldung: **05.10.2022**
(21) Anmeldenummer: 21401018.3
(22) Anmeldetag: 31.03.2021
(51) Int. Cl.: A47B 96/20, F16B 12/04, F16B 12/14

(54) **PLATTENBEFESTIGER UND DIESEN ENTHALTENES BEFESTIGUNGSSYSTEM SOWIE VERFAHREN**

(71) Anmelder: SieMatic Möbelwerke GmbH & Co. KG, 32584 Löhne (DE)
(72) Erfinder: Neumann, Rene, 84149 Velden (DE); Kämper, Stefan, 32584 Löhne (DE)
(74) Vertreter: Schober, Mirko

(57) **Zusammenfassung**

Ein Plattenbefestiger (1), insbesondere ein Möbelplattenbefestiger oder Möbelabschlusswangenbefestiger, umfasst einen, insbesondere zur zumindest teilweisen Anordnung in einer Ausnehmung (12) eines ersten Plattenbauteils (P1) oder einer Tragstruktur vorgesehenen, an einem ersten Plattenbauteil (P1) oder einer Tragstruktur zu befestigenden Basiskörper (2). Der Basiskörper (2) besitzt einen zur lösbaren Kopplung mit einem Verbindungselement (13) ausgebildeten Anbindebereich (4). Der Basiskörper (2) besitzt ferner eine zur stoffschlüssigen Verbindung mit einem zweiten Plattenbauteil (P2) vorgesehene Anklebeseite (S1). Der An-bindebereich (4) ist an einer der Anklebeseite (S1) abgewandten Kopplungsseite (S2) des Basiskörpers (2) angeordnet.

## Beschreibung

Die Erfindung betrifft einen Plattenbefestiger, insbesondere Möbelplattenbefestiger oder Möbelabschlusswangenbefestiger, gemäß den Merkmalen im Oberbegriff von Anspruch 1. Weiterhin betrifft die Erfindung ein Befestigungssystem, insbesondere Möbelplattenbefestigungssystem oder Möbelabschlusswangenbefestigungssystem, nach den Merkmalen von Anspruch 9 sowie ein Verfahren zur lösbaren Ankopplung von Plattenbauteilen mit einem solchen Befestigungssystem gemäß den Merkmalen in Anspruch 12.

Die lösbare Kopplung von Plattenbauteilen erfordert mitunter aufwendige Befestigungssysteme, da deren zumeist nur geringe Dicke keine ausreichend stabile Verschraubung im klassischen Sinne ermöglicht.

Neben dem typischen Anwendungsfall der Verbindung zweier einen rechten Winkel zwischen sich einschließender Plattenbauteile verlangt auch die Anordnung von den optischen Eindruck des jeweiligen Möbels prägenden Abschlusselementen entsprechende Lösungen. Diese auch als Abschlusswangen oder Abschlussfronten bekannten Abschlusselemente stellen hohe Anforderungen an die Einstellbarkeit des jeweiligen Befestigungssystems, um vor Ort Anpassungen an die jeweiligen Gegebenheiten und den Ausgleich etwaiger Toleranzen vornehmen zu können.

Die bisher bekannten Plattenbefestiger und Befestigungssysteme ermöglichen bereits bauartbedingt keine oder eine nur begrenzte Anpassung der relativen Lage der miteinander zu koppelnden Plattenbauteile. Hohe Anpassungsflexibilität bieten dagegen lediglich reine Klebeverbindungen, welche allerdings keine zerstörungsfreie Trennung der so miteinander verbundenen Plattenbauteile mehr ermöglicht. Insbesondere im Hinblick auf eine verantwortliche und nachhaltige Produktion von Plattenbauteile aufweisenden Möbeln besteht daher ein Bedarf an Flexibilität und beschädigungsfreier Lösbarkeit derartiger Verbindungen, um einen möglichst langen Werterhalt im Zusammenhang mit dem zumindest teilweisen Auf- und Abbau von Möbeln, wie beispielsweise im Küchenbereich, zu gewährleisten.

Vor diesem Hintergrund liegt der vorliegenden Erfindung die Aufgabe zugrunde, einen gattungsgemäßen Plattenbefestiger sowie ein diesen umfassendes Befestigungssystem dahingehend weiterzuentwickeln, dass eine hohe Anpassungsflexibilität in Bezug auf die relative Ausrichtung der damit zu verbindenden Plattenbauteile bei gleichzeitiger Lösbarkeit der Verbindung ermöglicht ist.

Die Lösung dieser Aufgabe besteht nach der Erfindung in einem Plattenbefestiger mit den Merkmalen von Anspruch 1. Auch wird diese Aufgabe durch ein Befestigungssystem mit den Merkmalen von Anspruch 9 gelöst. Weiterhin wird ein Verfahren zur lösbaren Ankopplung von Plattenbauteilen nach den Maßnahmen in Anspruch 12 vorgeschlagen. Vorteilhafte Weiterbildungen sind Gegenstand der jeweils abhängigen Ansprüche.

Der erfindungsgemäße Plattenbefestiger, welcher insbesondere als Möbelplattenbefestiger oder Möbelabschlusswangenbefestiger ausgebildet sein kann, umfasst einen an einem ersten Plattenbauteil oder einer Tragstruktur zu befestigenden Basiskörper, welcher einen zur lösbaren Kopplung mit einem Verbindungselement ausgebildeten Anbindebereich besitzt. Platten oder Möbelplatten im Sinne der Erfindung sind insbesondere nicht nur Frontplatten oder Abschlusswangen, sondern können auch andere Platten sein, die irgendwo am Möbel angebracht werden, beispielsweise auch hängende Platten unter Oberschränken oder liegende Platten, wie z. B. Arbeitsplatten auf den entsprechenden Unterkonstruktionen. Insbesondere kann der genannte Basiskörper zur zumindest teilweisen Anordnung in einer Ausnehmung des ersten Plattenbauteils vorgesehenen sein. Als Tragstrukturen kommen grundsätzlich alle tragenden Bauteile eines Möbelteils oder beispielsweise Wände in Räumen oder daran angebrachte Tragvorrichtungen in Betracht, an denen Platten befestigt werden können, beispielsweise auch Arbeitsplattenunterkonstruktionen oder Gestellteile. Soweit von miteinander verbundenen oder zu verbindenden Teilen die Rede ist, sind damit das zweite Plattenbauteil und das erste Plattenbauteil bzw. das zweite Plattenbauteil und die Tragstruktur gemeint.

Erfindungsgemäß wird nun vorgeschlagen, dass der Basiskörper des Plattenbefestigers eine zur stoffschlüssigen Verbindung mit einem Plattenbauteil vorgesehene Anklebeseite besitzt. Mit Bezug auf diese Anklebeseite ist der Anbindebereich dann an einer von dieser abgewandten Kopplungsseite des Basiskörpers angeordnet.

Der sich hieraus ergebende Vorteil ist darin zu sehen, dass der erfindungsgemäße Plattenbefestiger nunmehr zwei Arten an Befestigungsmöglichkeiten in sich vereint. Dabei ermöglicht die Anklebeseite des Plattenbefestigers eine - in Bezug auf die relative Lage der zu koppelnden Teile - überaus flexible dauerhafte Verbindung, während der Anbindebereich an der Kopplungsseite des Basiskörpers für die eigentliche lösbare Kopplung eines Plattenbauteils mit einem weiteren Plattenbauteil oder der Tragstruktursorgt. Da die Verklebung des zweiten Plattenbauteils mit der Anklebeseite des Plattenbefestigers quasi mit jedem Bereich einer Deckseite des Plattenbauteils erfolgen kann, ist die relative Lage des beispielsweise anzubringenden zweiten Plattenbauteils gegenüber dem ersten Plattenbauteil oder der Tragstruktur nahezu frei wählbar. Hierdurch können auch vor Ort in einfacher Weise Anpassungen und/oder der Ausgleich von Toleranzen in Bezug auf die relative Lage der so miteinander koppelbaren Teile vorgenommen werden.

Nach einer bevorzugten Weiterbildung des grundsätzlichen Erfindungsgedankens kann der Basiskörper die Form eines Zylinderabschnitts aufweisen. Hierbei kann es sich bevorzugt um den Abschnitt eines geraden Zylinders handeln. In jedem Fall ist dann die Anklebeseite an einer ersten Grundfläche des Basiskörpers gelegen, während die Kopplungsseite an einer der ersten Grundfläche abgewandten zweiten Grundfläche des Basiskörpers angeordnet ist. Die somit rotationssymmetrische Form des Basiskörpers des Plattenbefestigers ermöglicht dessen einfache Herstellung und/oder praktikable Einbringung in eine eventuell vorgesehene Ausnehmung in einem der Plattenbauteile oder der Tragstruktur, beispielsweise mittels einer entsprechenden Ausbohrung oder Ausfräsung.

Bevorzugt kann die Anklebeseite des Basiskörpers eine Struktur aufweisen, welche dann eine Ansatzfläche und wenigstens eine gegenüber der Ansatzfläche zurückspringende Verklebungsfläche besitzt. Der sich unmittelbar hieraus ergebende Vorteil liegt in der so definierbaren Schichtdicke des zur Ausbildung der stoffschlüssigen Verbindung notwendigen Klebemittels. Die Schichtdicke ergibt sich aus dem Abstand der Verklebungsfläche von der Ansatzfläche, wobei die Ansatzfläche dem tatsächlichen, zumindest bereichsweisen Kontakt des mit dem Plattenverbinder zu verklebenden zweiten Plattenbauteils dient. Der zwischen Ansatzfläche und Verklebungsfläche verbleibende Raum ermöglicht es dem Klebemittel auch beim Anpressen des zweiten Plattenbauteils an den Plattenverbinder in ausreichender Dicke vorhanden zu sein, so dass sich eine bevorzugt elastische Verbindung ergibt. Hierzu kann das Klebemittel entsprechend elastische, insbesondere dauerelastische, Eigenschaften besitzen, um die sich vor allem bei Schwankungen in der Temperatur oder/und Feuchtigkeit einstellenden, mitunter voneinander unterschiedlichen, Dehnungen der Plattenbauteile oder der Tragstruktur aufnehmen zu können. Auf diese Weise wird eine dauerhafte Verbindung zwischen den miteinander verbundenen Teilen ermöglicht, welche bei Bedarf einfach lösbar und wiederherstellbar ist.

In vorteilhafter Weise kann die Verklebungsfläche des Basiskörpers wenigstens eine Vertiefung besitzen, um so insbesondere beim Andrücken beziehungsweise Anpressen des zweiten Plattenbauteils an den Plattenverbinder eine dabei verdrängte Menge des Klebemittels aufnehmen zu können. Hierdurch kann das Klebemittel nicht unkontrolliert aus der Verbindung austreten, so dass sich eine saubere, insbesondere tropffreie, und optisch ansprechende Verklebung er-gibt. Unabhängig davon bewirkt die Vertiefung eine Vergrößerung der Oberfläche der Verklebungsfläche, was den Verbund mit dem Klebemittel erhöht. Mit zunehmender Anzahl derartiger Vertiefungen kann die Oberfläche weiter vergrößert werden.

Im Rahmen der Erfindung wird bevorzugt, wenn sich die Ansatzfläche der Struktur an der Anklebeseite zumindest abschnittsweise um die Verklebungsfläche herum erstreckt. Hierdurch bildet sich ein die Verklebungsfläche begrenzender Bereich aus, in dem das eingesetzte Klebemittel verbleibt. In vorteilhafter Weise kann die Ansatzfläche dabei, insbesondere geschlossen, ringförmig ausgestaltet sein, so dass diese eine möglichst umlaufende Abgrenzung der Verklebungsfläche bildet.

Weiterhin kann die wenigstens eine Vertiefung der Verklebungsfläche als geschlossener Ring ausgebildet sein, um eine zusammenhängende Kammer zur Aufnahme überschüssigen Klebemittels bereitzustellen. Selbstverständlich kann die Vertiefung auch als mindestens eine Unterbrechung aufweisender Ring ausgebildet sein, sofern sich hieraus weitere Vorteile, wie beispielsweise eine erhöhte Festigkeit, für den Plattenbefestiger ableiten lassen.

Mit Blick auf die lösbare Kopplung wird es als besonders vorteilhaft angesehen, wenn jener, der Anklebeseite abgewandte Anbindebereich als Innengewinde ausgebildet ist. Alternativ hierzu kann der Anbindebereich auch nur ein Innengewinde aufweisen. Das Innengewinde ermöglicht eine entsprechende Ausgestaltung des Verbindungselements, um die lösbare Kopplung letztlich realisieren zu können.

Grundsätzlich ist vorgesehen, dass der Anbindebereich des Plattenverbinders eine in oder an seinem Basiskörper angeordnete Schraubmutter mit einem Innengewinde aufweist. Bei der Schraubmutter kann es sich beispielsweise um eine handelsübliche Sechskant- oder Vierkantmutter handeln. Denkbar ist auch eine zylindrische Form der Schraubmutter, die dann beispielsweise eine umlaufende Rändelung besitzen kann, um verdrehfest an dem Basiskörper angeordnet zu sein. In allen Fällen kann der Basiskörper eine, insbesondere formangepasste, Vertiefung besitzen, in der die Schraubmutter verdrehfest einlegbar ist. Sofern es sich bei dem Basiskörper um einen solchen aus einem Kunststoff handelt, kann die Schraubmutter im Rahmen seiner Fertigung in diesen eingegossen sein.

Der nunmehr vorgestellte erfindungsgemäße Plattenbefestiger ermöglicht eine überaus flexible und jederzeit lösbare Kopplung zweier Plattenbauteile oder eines Plattenbauteils und einer Tragstruktur miteinander. Die dabei wesentliche Kombination aus mechanischer Lösbarkeit und nahezu an jeder Stelle eines Plattenbauteils vornehmbaren Verklebung mit dem Plattenbefestiger erfüllt selbst höchste Anforderungen an eine zunächst individuelle Festlegung und anschließend dauerhafte sowie jederzeit zerstörungsfrei lösbare Verbindung.

Weiterhin ist die Erfindung auf ein Befestigungssystem gerichtet, welches wenigstens einen erfindungsgemäßen Plattenbefestiger sowie ein mit dem Anbindebereich seines Basiskörpers korrespondierendes Verbindungselement umfasst. Mit Blick auf den bevorzugten Einsatz kann das Befestigungssystem auch als Möbelplattenbefestigungssystem oder Möbelabschlusswangenbefestigungssystem bezeichnet werden. In jedem Fall dient das Befestigungssystem der lösbaren Kopplung eines zweiten Plattenbauteils mit oder an einem ersten Plattenbauteil oder einer Tragstruktur.

Die sich hieraus ergebenden Vorteile wurden bereits im Zusammenhang mit dem erfindungsgemäßen Plattenbefestiger näher erläutert, so dass zur Vermeidung von Wiederholungen an dieser Stelle auf die entsprechenden Ausführungen hierzu verwiesen wird.

Gemäß einer bevorzugten Weiterbildung des erfindungsgemäßen Befestigungssystems kann dessen Verbindungselement eine ein Außengewinde besitzende Schraube sein oder wenigstens eine solche umfassen. In vorteilhafter Weise kann es sich dabei um eine genormte Schraube handeln, welche beispielsweise ein Außengewinde M4 aufweisen kann. Demgegenüber kann das Innengewinde beziehungsweise die Schraubmutter des Plattenbefestigers ein korrespondierendes Innengewinde M4 besitzen. Selbstverständlich gilt dies auch für alle anderen möglichen Größen, wie beispielsweise M6 oder M8, um nur einige zu nennen. Dem Fachmann obliegt angesichts des jeweiligen Einsatzzwecks und den zu erwartenden Belastungen die Wahl der jeweils geeigneten oder gar erforderlichen Gewindegrößen.

Weiterhin kann das Befestigungssystem ein noch aufzubringendes oder bereits an der Anklebeseite des Basiskörpers des Plattenbefestigers angeordnetes Klebemittel umfassen. Im letztgenannten Fall kann das Klebemittel entsprechend präpariert sein, um erst im Anwendungsfall seine adhäsiven Eigenschaften zu entfalten oder zu nutzen. Denkbar ist etwa eine Abdeckung des werksseitig aufgetragenen Klebemittels, beispielsweise mit einer erst bei der Anwendung entfernbaren Schicht aus Papier und/oder Kunststoff.

Ein mögliches Verfahren zur lösbaren Kopplung zweier Plattenbauteile mit dem erfindungsgemäßen Befestigungssystem kann die folgenden Schritte umfassen:
- Ggf. Ausbilden einer Ausnehmung am ersten Plattenbauteil oder einer Tragstruktur;
- Ausbilden eines, insbesondere gegenüber der Ausnehmung kleineren, Durchgangs am ersten Plattenbauteil oder der Tragstruktur, insbesondere im Bereich der gegebenenfalls vorhandenen Ausnehmung;
- Zumindest teilweises Anordnen des Plattenbefestigers mit der Kopplungsseite seines Basiskörpers voran am ersten Plattenbauteil oder der Tragstruktur, insbesondere innerhalb der gegebenenfalls vorhandenen Ausnehmung;
- Festlegen des Plattenbefestigers am ersten Plattenbauteil oder der Tragstruktur, insbesondere innerhalb der gegebenenfalls vorhandenen Ausnehmung, durch Einführen eines Verbindungselements von einer dem Plattenbefestiger abgewandten ersten Seite oder Deckseite des ersten Plattenbauteils oder der Tragstruktur aus durch den Durchgang hindurch in den Anbindebereich seines Basiskörpers;
- Bedarfsweise Anordnung des Klebemittels zumindest bereichsweise auf der Anklebeseite des Basiskörpers des Plattenbefestigers;
- Annähern des zweiten Plattenbauteils mit seiner ersten Seite oder Deckseite an eine der ersten Seite oder Deckseite gegenüberliegenden zweiten Seite oder Deckseite des ersten Plattenbauteils oder der Tragstruktur derart, dass die erste Seite oder Deckseite des zweiten Plattenbauteils mit dem am Plattenbefestiger angeordneten Klebemittel in Kontakt tritt.

Gemäß einer vorteilhaften Weiterbildung des Verfahrens kann dieses auch die folgende Maßnahme beinhalten:
- Anpressen des zweiten Plattenbauteils an das erste Plattenbauteil oder die Tragstruktur derart, dass die erste Deckseite des zweiten Plattenbauteils unter Ausbildung einer definierten Schichtdicke des Klebemittels zumindest bereichsweise an der Ansatzfläche der Anklebeseite des Basiskörpers des Plattenbefestigers anliegt.

Eine weitere mögliche Maßnahme des erfindungsgemäßen Verfahrens kann folgenden Schritt enthalten:
- Ausrichten des zweiten Plattenbauteils relativ zum ersten Plattenbauteil oder der Tragstruktur während der Annäherung oder/und des Anpressens des zweiten Plattenbauteils an das erste Plattenbauteil oder die Tragstruktur.

Nachfolgend wird die Erfindung anhand eines in den Zeichnungen schematisch dargestellten Ausführungsbeispiels näher erläutert. Es zeigen:
- Fig. 1: einen erfindungsgemäßen Plattenbefestiger in einer perspektivischen Darstellungsweise,
- Fig. 2: einen Schnitt durch den Plattenbefestiger aus Fig. 1 in ansonsten gleicher Darstellungsweise,
- Fig. 3: einen Längsschnitt durch den Plattenbefestiger aus Fig. 1 in entsprechend geänderter Darstellungsweise,
- Fig. 4: ein erfindungsgemäßes Befestigungssystem bei seinem Einsatz für ein Möbel in einer perspektivischen Explosionsdarstellung,
- Fig. 5: das bereits an dem Möbel festgelegte Befestigungssystem aus Fig. 4 in Kombination mit einem über dieses festzulegenden Plattenbauteils in ansonsten gleicher Darstellungsweise.

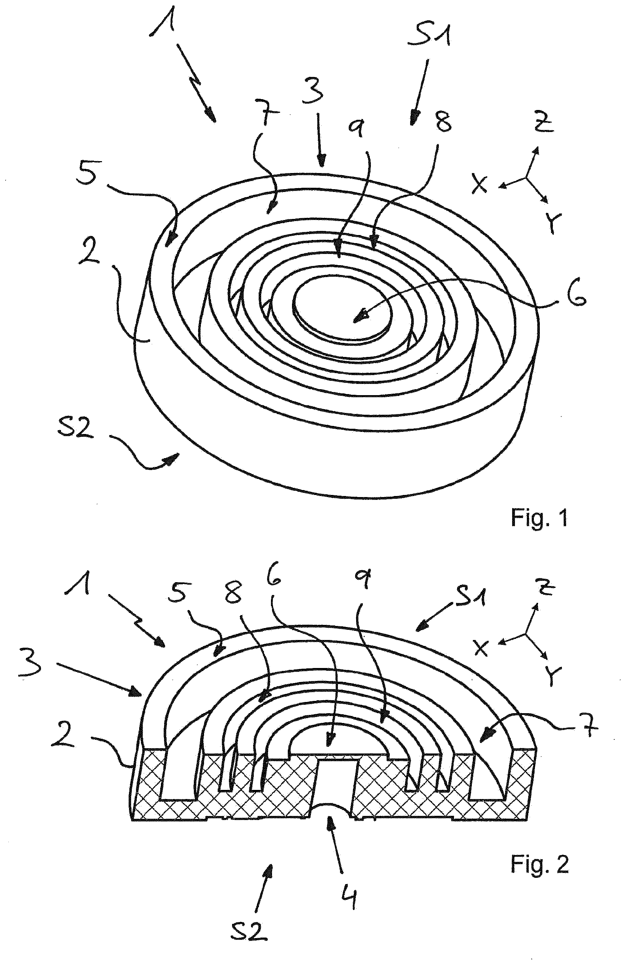

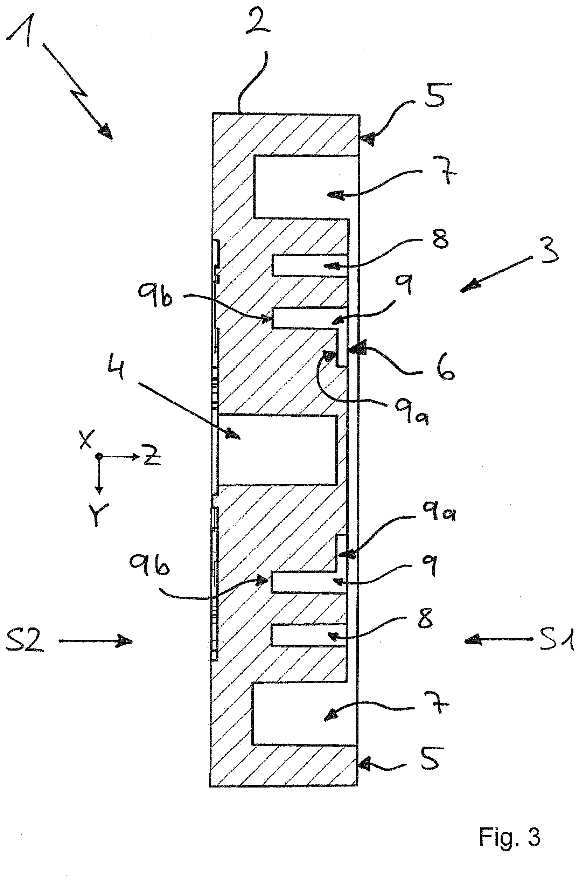

Fig. 1 ist die perspektivische Darstellung eines erfindungsgemäßen Plattenbefestiger 1 zu entnehmen. Dieser weist einen Basiskörper 2 auf, welcher vorliegend die Form eines Zylinderabschnitts besitzt. Der insofern hier rein beispielhaft kreisrunde Basiskörper 2 erstreckt sich parallel zu einer zwischen eine Längsrichtung X und einer Querrichtung Y aufgespannten Ebene, wobei dessen Höhe in eine Hochrichtung Z verläuft. An einer ersten der voneinander abgewandten Grundflächen des zylinderabschnittsförmigen Basiskörpers 2 ist eine Anklebeseite S1 gelegen, auf welche in der Darstellung von Fig. 1 der Blick fällt. An einer von der ersten Grundfläche und insofern auch der Anklebeseite S1 abgewandten zweiten Grundfläche des Basiskörpers 2 befindet sich eine hier nicht näher erkennbare Kopplungsseite S2. Erkennbar weist die Anklebeseite S1 des Basiskörpers 2 eine Struktur 3 auf, welche in Verbindung mit Fig. 3 noch näher beschrieben wird.

Fig. 2 zeigt einen Schnitt durch den Plattenbefestiger 1 aus Fig. 1, was insbesondere die Form der Struktur 3 der Anklebeseite S1 weiter verdeutlicht. Nun weiterhin erkennbar ist ein an der Kopplungsseite S2 angeordneter Anbindebereich 4, welcher vorliegend im Zentrum des Basiskörpers 2 gelegen ist.

Fig. 3 verdeutlicht die Ausbildung der Struktur 3 an der Anklebeseite S1 des Basiskörpers 2 anhand eines Längsschnitts durch diesen hindurch. Diese weist eine Ansatzfläche 5 auf, welche sich in Fig. 1 und Fig. 2 als äußerer Ring darstellt. Innerhalb der Ansatzfläche 5 befindet sich eine Verklebungsfläche 6, welche in dem hier gezeigten Beispiel vollständig gegenüber der Ansatzfläche 5 zurückspringt. Dabei erstreckt sich die Ansatzfläche 5 ringförmig um die Verklebungsfläche 6 herum und begrenzt diese. Die Verklebungsfläche 6 besitzt vorliegend insgesamt drei Vertiefungen 7 9, die jeweils als ein geschlossener Ring ausgebildet sind. Insofern handelt es sich bei den Vertiefungen 7 9 jeweils um eine Ringnut. Die innerste Vertiefung 9 weist dabei ein Plateau 9a auf, gegenüber dem der Grund 9b der Vertiefung 9 weiter zurückspringt.

In hier nicht näher gezeigter Weise kann der Anbindebereich 4 ein Innengewinde aufweisen oder als solches ausgestaltet sein. Hierzu kann der Anbindebereich 4 eine - hier ebenfalls nicht näher ersichtliche - im oder am Basiskörper 2 angeordnete Schraubmutter mit einem Innengewinde aufweisen.

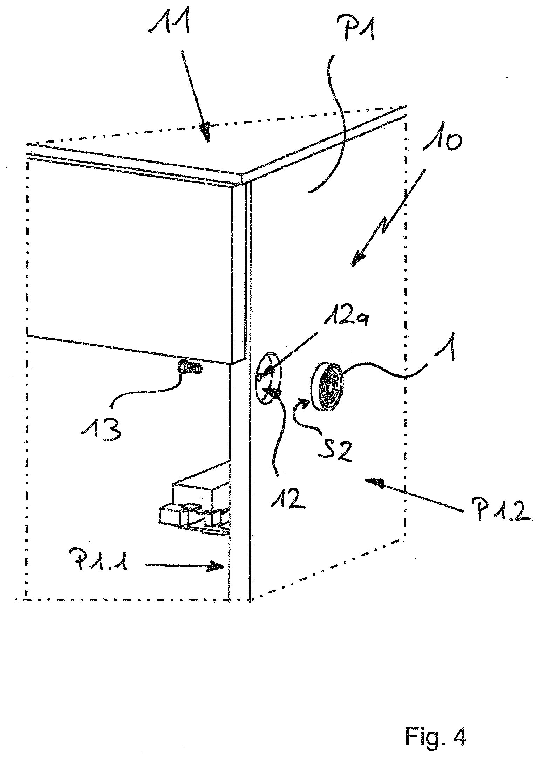

Fig. 4 ist ein erfindungsgemäßes Befestigungssystem 10 zu entnehmen, welches vorliegend mit einem für dessen Einsatz vorgesehenen Möbel 11 dargestellt ist. Bei dem Möbel 11 kann es sich um den Korpus eines Küchenmöbels handeln. Aus Gründen der besseren Übersichtlichkeit ist nur ein Teil des Möbel 11 dargestellt. Das Möbel 11 weist ein erstes Plattenelement P1 auf, bei dem es sich hier rein beispielhaft um eine Seitenwand handelt. Erkennbar besitzt das erste Plattenelement P1 eine an die Form des Plattenverbinders 1 formangepasste Ausnehmung 12. Diese Ausnehmung ist jedoch nicht zwingend erforderlich, sondern erhöht durch den Formschluss lediglich die Festigkeit der Verbindung. Die vorteilhafterweise vorgesehene Ausnehmung ist an einer der im Inneren des Möbels 11 gelegenen ersten Deckseite P1.1 des Plattenelements P1 abgewandten zweiten Deckseite P1.2 des Plattenelements P1 gelegen. Die Ausnehmung 12 weist einen in deren Zentrum gelegenen und gegenüber der Ausnehmung 12 selbst kleineren Durchgang 12a auf, durch welche hindurch ein Verbindungselement 13 des Befestigungssystems 10 angeordnet werden kann.

Wie zu erkennen, wird der Plattenverbinder 1 mit der Kopplungsseite S2 seines Basiskörpers 2 voran innerhalb der Ausnehmung 12 angeordnet und durch das Verbindungselement 13 in seiner Lage lösbar fixiert. Je nach Ausgestaltung kann dessen Anklebeseite S1 bereits ein Klebemittel aufweisen oder wird nunmehr mit einem solchen ausgestattet, beispielsweise über eine manuell geführte Kartuschenpistole.

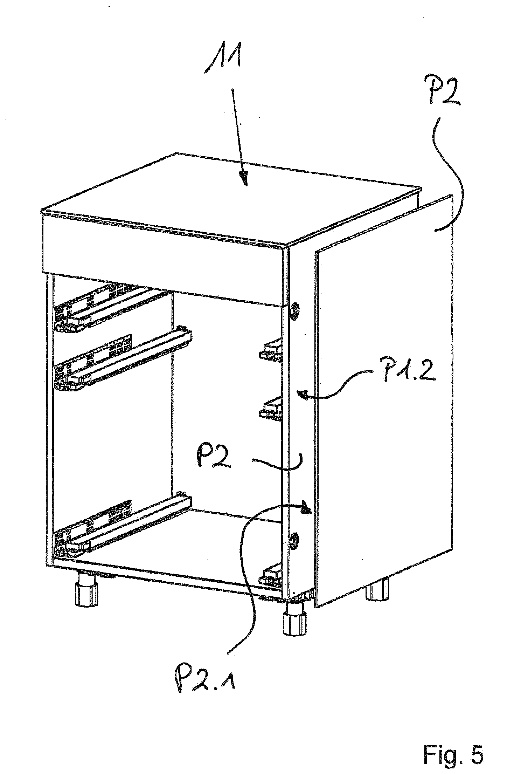

Fig. 5 verdeutlicht die Situation kurz vor der Kopplung eines zweiten Plattenbauteils P2 mit dem ersten Plattenbauteil P1 des Möbels 11. Das zweite Plattenbauteil P2 wird hierzu mit seiner ersten Deckseite P2.1 voran so weit an das erste Plattenbauteil P1 angenähert, bis dessen erste Deckseite 2.1 mit dem am Plattenbefestiger 1 angeordnete Klebemittel in Kontakt tritt. In dieser Situation ist eine einfache Ausrichtung des zweiten Plattenbauteils P2 relativ zum ersten Plattenbauteil P1 möglich. Anschließend wird das zweite Plattenbauteil P2 so an das erste Plattenbauteil P1 gepresst, bis dessen erste Deckseite P2.1 unter Ausbildung einer definierten Schichtdicke des Klebemittels zumindest bereichsweise an der Ansatzfläche 5 der Anklebeseite S1 des Basiskörpers 2 des Plattenbefestigers 1 anliegt. Das in den Figuren gezeigte und der vorangegangenen Beschreibung beschriebene erste Plattenbauteil P1 muss keine Platte sein. Vielmehr kann anstelle des ersten Plattenbauteils P1 jede Form von Tragstruktur verwendet werden, die geeignet ist, daran ein zweites Plattenbauteil P2 mittels des erfindungsgemäßen Plattenbefestiger zu befestigen. Insbesondere sei darauf hingewiesen, dass die Bezeichnung zweites Plattenbauteil in dieser Beschreibung und den Ansprüchen nicht bedeutet, dass zwingend wenigstens zwei Plattenbauteile vorhanden sein müssen.

## Patentansprüche

1. Plattenbefestiger (1), insbesondere Möbelplattenbefestiger oder Möbelabschlusswangenbefestiger, umfassend einen, insbesondere zur zumindest teilweisen Anordnung in einer Ausnehmung (12) eines ersten Plattenbauteils (P1) oder einer Tragstruktur vorgesehenen, an einem ersten Plattenbauteil (P1) oder einer Tragstruktur zu befestigenden Basiskörper (2), welcher einen zur lösbaren Kopplung mit einem Verbindungselement (13) ausgebildeten Anbindebereich (4) besitzt,
**dadurch gekennzeichnet,**
**dass** der Basiskörper (2) eine zur stoffschlüssigen Verbindung mit einem zweiten Plattenbauteil (P2) vorgesehene Anklebeseite (S1) besitzt, wobei der Anbindebereich (4) an einer der Anklebeseite (S1) abgewandten Kopplungsseite (S2) des Basiskörpers (2) angeordnet ist.

2. Plattenbefestiger (1) nach Anspruch 1,
**dadurch gekennzeichnet,**
**dass** der Basiskörper (2) die Form eines, insbesondere geraden, Zylinderabschnitts aufweist, wobei die Anklebeseite (S1) an einer ersten Grundfläche des Basiskörpers (2) und die Kopplungsseite (S2) an einer der ersten Grundfläche abgewandten zweiten Grundfläche des Basiskörpers (2) gelegen ist.

3. Plattenbefestiger (1) nach Anspruch 1 oder 2,
**dadurch gekennzeichnet,**
**dass** die Anklebeseite (S1) des Basiskörpers (2) eine Struktur (3) aufweist, welche eine Ansatzfläche (5) und wenigstens eine gegenüber der Ansatzfläche (5) zurückspringende Verklebungsfläche (6) besitzt.

4. Plattenbefestiger (1) nach Anspruch 3,
**dadurch gekennzeichnet,**
**dass** die Verklebungsfläche (6) wenigstens eine Vertiefung (7 9) besitzt.

5. Plattenbefestiger (1) nach Anspruch 3 oder 4,
**dadurch gekennzeichnet,**
**dass** sich die Ansatzfläche (5) zumindest abschnittsweise um die Verklebungsfläche (6) herum, insbesondere ringförmig, erstreckt.

6. Plattenbefestiger (1) nach Anspruch 4 oder 5,
**dadurch gekennzeichnet,**
**dass** die wenigstens eine Vertiefung (7 9) als geschlossener oder mindestens eine Unterbrechung aufweisender Ring ausgebildet ist.

7. Plattenbefestiger (1) nach einem der vorhergehenden Ansprüche,
**dadurch gekennzeichnet,**
**dass** der Anbindebereich (4) als Innengewinde ausgebildet ist oder ein solches aufweist.

8. Plattenbefestiger (1) nach einem der vorhergehenden Ansprüche,
**dadurch gekennzeichnet,**
**dass** der Anbindebereich (4) eine im oder am Basiskörper (2) angeordnete Schraubmutter mit einem Innengewinde aufweist.

9. Befestigungssystem (10), insbesondere Möbelplattenbefestigungssystem oder Möbelabschlusswangenbefestigungssystem, zur lösbaren Kopplung eines zweiten Plattenbauteils (P2) mit oder an einem ersten Plattenbauteil (P1) oder einer Tragstruktur, umfassend einen Plattenbefestiger (1) nach einem der vorhergehenden Ansprüche sowie ein mit dem Anbindebereich (4) seines Basiskörpers (2) korrespondierendes Verbindungselement (13).

10. Befestigungssystem (10) nach Anspruch 9,
**dadurch gekennzeichnet,**
**dass** das Verbindungselement (13) eine ein Außengewinde besitzende Schraube ist oder eine solche aufweist.

11. Befestigungssystem (10) nach Anspruch 9 oder 10,
**gekennzeichnet durch**
ein bereits an der Anklebeseite (S1) des Basiskörpers (2) angeordnetes oder anordenbares Klebemittel.

12. Verfahren zur lösbaren Kopplung eines zweiten Plattenbauteils (P2) mit oder an einem ersten Plattenbauteil (P1) oder einer Tragstruktur mit einem Befestigungssystem (10) nach einem der Ansprüche 9 bis 11, umfassend die folgenden Schritte:
- gegebenenfalls Ausbilden einer Ausnehmung (12) am ersten Plattenbauteil (P1) oder einer Tragstruktur;
- Ausbilden eines, insbesondere gegenüber der Ausnehmung (12) kleineren, Durchgangs (12a) am ersten Plattenbauteil (P1) oder der Tragstruktur, insbesondere im Bereich der gegebenenfalls vorhandenen Ausnehmung (12) ;
- Zumindest teilweises Anordnen des Plattenbefestigers (1) mit der Kopplungsseite (S2) seines Basiskörpers (2) voran am ersten Plattenbauteil (P1) oder an der Tragstruktur, insbesondere innerhalb der gegebenenfalls vorhandenen Ausnehmung (12);
- Festlegen des Plattenbefestigers (1) am ersten Plattenbauteil (P1) oder der Tragstruktur, insbesondere innerhalb der gegebenenfalls vorhandenen Ausnehmung (12), durch Einführen eines Verbindungselements (13) von einer dem Plattenbefestiger (1) abgewandten ersten Seite, insbesondere Deckseite, (P1.1) des ersten Plattenbauteils (P1) oder der Tragstruktur aus durch den Durchgang (12a) hindurch in den Anbindebereich (4) seines Basiskörpers (2);
- Bedarfsweise Anordnung des Klebemittels zumindest bereichsweise auf der Anklebeseite (S1) des Basiskörpers (2) des Plattenbefestigers (1);
- Annähern des zweiten Plattenbauteils (P2) mit seiner ersten Deckseite (P2.1) an eine der ersten Seite, insbesondere Deckseite, (P1.1) gegenüberliegenden zweiten Seite, insbesondere Deckseite, (P1.2) des ersten Plattenbauteils (P1) oder der Tragstruktur derart, dass die erste Deckseite (P2.1) des zweiten Plattenbauteils (P2) mit dem am Plattenbefestiger (1) angeordneten Klebemittel in Kontakt tritt.

13. Verfahren nach Anspruch 12,
**gekennzeichnet durch** die Maßnahme:
Anpressen des zweiten Plattenbauteils (P2) an das erste Plattenbauteil (P1) oder die Tragstruktur derart, dass die erste Seite, insbesondere Deckseite, (P2.1) des zweiten Plattenbauteils (P2) unter Ausbildung einer definierten Schichtdicke des Klebemittels zumindest bereichsweise an der Ansatzfläche (5) der Anklebeseite (S1) des Basiskörpers (2) des Plattenbefestigers (1) anliegt.

14. Verfahren nach Anspruch 12 oder 13,
**gekennzeichnet durch** die Maßnahme:
Ausrichten des zweiten Plattenbauteils (P2) relativ zum ersten Plattenbauteil (P1) oder zur Tragstruktur während der Annäherung oder/und des Anpressens des zweiten Plattenbauteils (P2) an das erste Plattenbauteil (P1) oder die Tragstruktur.
